# EUROPEAN PATENT APPLICATION

(11) **EP 4 585 915 A1**
(43) Date of publication of application: **16.07.2025**
(21) Application number: 24215305.4
(22) Date of filing: 26.11.2024
(51) Int. Cl.: G01N 29/14, G01N 29/46, B22F 12/90

(54) **ATOMIZATION SYSTEM DIAGNOSTICS**

(30) Priority: 11.01.2024 US 202418410882
(71) Applicant: Rolls-Royce Corporation, Indianapolis, IN 46225-1103 (US); Rolls-Royce North American Technologies Inc., Indianapolis IN 46241 (US)
(72) Inventor: GOLD, Matthew R., INDIANAPOLIS, 46241 (US); LAGOW, Benjamin W., INDIANAPOLIS, 46225-1103 (US); BLAIR, Taylor K., INDIANAPOLIS, 46225-1103 (US)
(74) Representative: Ström & Gulliksson AB

(57) **Abstract**

An example system includes at least one acoustic sensor configured to generate at least one time-dependent acoustic data signal indicative of an acoustic signal generated by an atomization system performing a process possessing a plurality of process attributes, and a computing device including an acoustic data signal processing module configured to receive the at least one time-dependent acoustic data signal, and transform the at least one time-dependent acoustic data signal to a frequency-domain spectrum, wherein each process attribute of the plurality of process attributes is associated with at least one respective frequency band, and a correlation module configured to determine a process attribute of the plurality of process attributes by identifying at least one characteristic of the frequency-domain spectrum.

## Description

### TECHNICAL FIELD

The disclosure relates to atomization systems, for example, to systems that form particulates by atomization of a precursor composition.

### BACKGROUND

Atomization systems are used in a wide variety of industrial applications to prepare powder or particulates by atomizing precursor compositions. For example, in spray drying, an aqueous solution or suspension is dispersed into droplets that are dried to produce a powder. In metal atomization, a stream including molten metal or alloy is dispersed into droplets by a fluid and solidified to produce a powder. Atomization systems may include a nozzle to facilitate dispersing or producing droplets from a solution, suspension, or a melt.

### SUMMARY

In some examples, the disclosure describes a system including at least one acoustic sensor configured to generate at least one time-dependent acoustic data signal indicative of an acoustic signal. The acoustic signal is generated by an atomization system performing a process possessing a plurality of process attributes. The system also may include a computing device that includes an acoustic data signal processing module. The acoustic data signal processing module may be configured to receive the at least one time-dependent acoustic data signal, and transform the at least one time-dependent acoustic data signal to a frequency-domain spectrum. Each process attribute of the plurality of process attributes may be associated with at least one respective frequency band. The computing device may additionally include a correlation module configured to determine a process attribute of the plurality of process attributes by identifying at least one characteristic of the frequency-domain spectrum.

In some examples, the disclosure describes a method including receiving, by a computing device, from at least one acoustic sensor, at least one time-dependent acoustic data signal indicative of an acoustic signal generated by an atomization system performing a process possessing a plurality of process attributes. The method also may include transforming, by the computing device, the at least one time-dependent acoustic data signal to a frequency-domain spectrum. Each process attribute of the plurality of process attributes may be associated with at least one respective frequency band. Further, the method may include determining, by the computing device, a process attribute of the plurality of process attributes by identifying at least one characteristic of the frequency-domain spectrum.

In some examples, the disclosure describes a computer readable storage medium. In this example, the computer readable storage medium includes instructions that, when executed, cause at least one processor to receive, from at least one acoustic sensor, at least one time-dependent acoustic data signal indicative of an acoustic signal. The acoustic signal is generated by an atomization system performing a process possessing a plurality of process attributes. The computer readable storage medium also may include instructions that, when executed, cause at least one processor to transform the at least one time-dependent acoustic data signal to a frequency-domain spectrum. Each process attribute of the plurality of process attributes may be associated with at least one respective frequency band. The computer readable storage medium additionally may include instructions that, when executed, cause at least one processor to determine a process attribute of the plurality of process attributes by identifying at least one characteristic of the frequency-domain spectrum.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a conceptual block diagram illustrating an example atomization system including a computing device for analyzing an acoustic signal generated by an atomization system performing a process possessing a plurality of process attributes to determine a process attribute of the plurality of process attributes.
FIG. 2 is a conceptual block diagram illustrating an example of a computing device for analyzing an acoustic signal generated by an atomization system performing a process possessing a plurality of process attributes to determine a process attribute of the plurality of process attributes.
FIG. 3 is a conceptual block diagram illustrating an example metal atomization system.
FIG. 4 is a flow diagram illustrating an example technique for analyzing an acoustic signal generated by an atomization system performing a process possessing a plurality of process attributes to determine a process attribute of the plurality of process attributes.

### DETAILED DESCRIPTION

The disclosure describes systems and techniques for analyzing an acoustic signal generated by an atomization process to determine one or more attributes of the atomization process, and for controlling an atomization system. The atomization process may be performed by the atomization system to produce a powder or particulate material from a precursor composition, for example, a solution, a suspension, or a melt. The atomization system may include at least one component, such as an atomization nozzle, a material feed system, an atomizing fluid feed system, or like.

During an atomization process, the atomization nozzle receives atomization material to be dispersed into droplets, and subsequently solidified (for example, by drying or solidification). The atomization material may be atomized by an atomizing fluid, for example, forming a spray of droplets. Alternatively, atomization may be induced by gravity, fluid flow, a pressure difference, or any other suitable driving force.

The droplets may be received in a chamber in which the droplets may dry or solidify into particulates. For example, the chamber may be a heated chamber, and the droplets of a solution or a suspension may dry in course of traveling through the chamber. In other examples, the chamber may include a cooling fluid, for example, water, and droplets including a melt (for example, molten metal or alloy) may solidify in course of traveling through the cooling fluid.

Continued atomization may result in variations in process stability over relatively extended periods of time that may be required for fabricating a relatively large amount of particulate material. For example, flow rate, temperature, pressure, or some other parameter associated with one or more of atomization material, atomizing fluid, or cooling fluid may change during a process run. Additionally, extended atomization operations may lead to nozzle wear or nozzle blockage or clogging. Because sound is emitted from the nozzle due to flow of atomization material or atomization fluid in course of atomization, there are changes in the acoustic signal generated as the nozzle geometries are changed. Using the acoustic emission for diagnostics may facilitate reducing or avoiding deviation of an atomization process beyond acceptable range, and thus reduce or avoid defective particulates produced by atomization. Monitoring acoustic emissions may also be used to generate an alert, which may prompt an operator to change a component (for example, a nozzle) prior to failure, and continue or resume manufacturing while substantially conforming to process and product specifications.

In some examples, the quality of the particulate may depend on process attributes including, for instance, the atomization material composition and flow rate; the atomizing fluid composition, temperature, and flow rate; chamber temperature, pressure, and shape; the condition of the at least one component (e.g., the atomization nozzle); and the like. Unsatisfactory product characteristics may result from variances in process attributes, including process parameters, component wear, or both.

In some examples, the at least one component (e.g., the atomization nozzle) includes a nozzle, for example, a spray nozzle. In course of spraying, material may build up on internal surfaces of the nozzle. Internal surfaces of the nozzle may also be deformed or worn, for example, by contact with material. Such changes to the nozzle influence the flow of atomization material (and/or atomizing fluid) through the nozzle, and ultimately, affect product characteristics. Increasing changes may cause product characteristics to deviate from nominal specifications or tolerances. Thus, the atomization nozzle may need maintenance or replacement after a period of operation. A particulate manufacturing process (for example, to produce a powder) based on atomization may include a relatively prolonged process duration. Changes to the nozzle in course of atomization may affect the quality of the product in course of atomization. Thus, a need may arise to suspend the manufacturing process, perform maintenance or replacement of the atomization nozzle, and resume the manufacturing process.

During operation of the atomization system, the at least one component may generate an acoustic signal (e.g., sound), which may be associated with atomization parameters, a condition of the at least one component, or both. The atomization system may include at least one acoustic sensor configured to generate at least one time-dependent acoustic data signal representative of the acoustic signal generated by the at least one component. The system also may include a computing device configured to analyze the at least one time-dependent acoustic data signal.

The time-dependent acoustic data signal may be rich in information, and may include data representative of acoustic signals generated by one or more component of the atomization system. The acoustic signals may also be representative of process parameters or variations in process parameters. For example, the acoustic signal generated by an atomization nozzle may depend upon process attributes including, for example, geometry of a nozzle, including wear of the atomization nozzle, material deposit within the nozzle or at ends of the nozzle, atomization material flow rate, atomization material flow pulsing, atomizing fluid flow rate, atomization material composition, or the like. In this way, the computing device may analyze the time-dependent acoustic data signal to determine whether process attributes associated with the atomization nozzle are within a nominal or expected range, or if the process attributes are varying compared to an expected value. The computing device may also control at least one process attribute, or at least one component, or the atomization system, to maintain or adjust the process attribute to be within the nominal or expected range, or within a threshold amount of the expected value.

In some examples, the atomization system may include a plurality of acoustic sensors, and respective acoustic sensors may be positioned near respective components of the atomization process. In some examples, each acoustic sensor of the plurality of acoustic sensors may generate a respective at least one time-dependent acoustic data signal. Because of the different positions of the respective acoustic sensors, the computing device may analyze the respective time-dependent acoustic data signals to determine information related to respective components of the atomization system. For example, each respective time-dependent acoustic data signal may be associated with the respective component to which the respective acoustic sensor is near. Alternatively or additionally, the computing device may utilize the intensity of respective frequency components of at least one time-dependent acoustic data signal to determine, e.g., based on distance, to which component the sound may be attributed. In this way, the computing device may analyze the time-dependent acoustic data signal or time-dependent acoustic data signals to determine process attributes for a plurality of components of the atomization system.

By utilizing the at least one time-dependent acoustic data signal, the atomization system described herein may perform real-time or near real-time analysis or control of operation of at least one component of the atomization system. Further, monitoring a time-dependent acoustic data signal representative of one or more outputs of the atomization system may provide a more accurate indication of process attributes of the atomization system, e.g., compared to monitoring inputs to the atomization system using a flow meter, flow controller, amp meter, or voltmeter. Further, in some examples, flow meters, flow controllers, amp meters, and voltmeters may require calibration, and falling out of calibration may reduce the accuracy of the feedback provided by out-of-calibration flow meters, flow controllers, amp meters, and voltmeters.

In particulate manufacturing processes (for example, powder manufacturing), by utilizing the at least one time-dependent acoustic data signal, the atomization system described herein may continue, suspend, or resume a manufacturing process run in response to the time-dependent acoustic data signal. For example, the atomization system may continue the manufacturing process run in response to determining that the at least one component (e.g., the atomization nozzle) conforms to specifications, may suspend the run in response to determining that the at least one component deviates from the specifications to allow maintenance or replacement, and may resume the run in response to determine that the at least one component (after maintenance or replacement) conforms to specifications. Additionally, if the atomization system determines, in response to the time-dependent acoustic data signal, that the at least one component does not conform to specifications even after maintenance or replacement, the atomization system may suspend the run again, and generate an alert indicative of the need for further maintenance or replacement. For example, further maintenance or replacement may be required if the at least one component was insufficiently cleaned, or replaced with an incorrect or worn replacement component.

The atomization system may, based on the at least one time-dependent acoustic data signal, perform automated control of operation of at least one component, for example, by causing operation of at least one component (or of another component, or of the system as a whole) to initiate, continue, suspend, terminate, or resume, or by modifying at least one process parameter associated with, affected by, or affecting, the at least one component, another component, or the system as a whole. For example, the computing device may control the atomization system by adjusting at least one process attribute associated with at least one component of the atomization system based on the at least one time-dependent acoustic data signal. In some examples, the computing device may adjust the process attribute by selecting at least one component based on the process attribute and determining a control signal for the component based on the comparison of the spectrum of the acoustic data signal with a baseline spectrum. The computing device may send the control signal to the selected at least one component to adjust the process attribute. For example, the computing device may determine a control signal that controls the at least one component to cause the process attribute to remain or be adjusted to be within a nominal or expected range, or within a threshold amount of the expected value.

Thus, example systems and techniques according to the disclosure may be used to adjust a process parameter of the atomization system, based on an acoustic signal generated by the atomization system. By utilizing the at least one time-dependent acoustic data signal, the atomization system described herein may perform real-time or near real-time control of operation of at least one component of the atomization system. Systems and techniques according to the disclosure provide near real-time feedback to an operator or a process controller for controlling components of atomization systems to adjust process attributes, or to shut down the components or the system, as appropriate

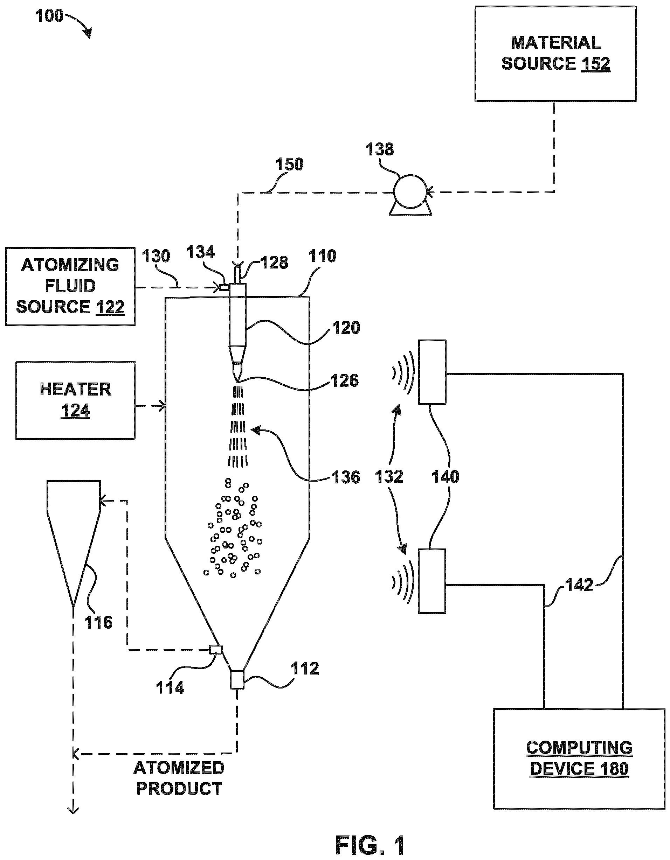

FIG. 1 is a block diagram illustrating an example atomization system 100. In some examples, atomization system 100 includes components such as a solidification chamber 110, an atomization nozzle 120, at least one acoustic sensor 140, and a computing device 180.

Solidification chamber 110 may enclose some components of atomization system 100, including, for example, atomization nozzle 120 and at least one acoustic sensor 140. In other examples, at least one acoustic sensor 140 may be positioned external to solidification chamber 110, as shown in FIG. 1. In some examples, solidification chamber 110 may enclose a portion of, or an entirety of atomization nozzle 120. In further examples, only a tip portion of atomization nozzle 120 may extend into solidification chamber 110, with a remaining portion of atomization nozzle 120 extending external to solidification chamber 110.

The interior of solidification chamber 110 may be maintained at ambient temperature, or may be heated or cooled. For example, if the atomization material includes a solution or suspension to be sprayed into solidification chamber 110 and dried to form a particulate product, solidification chamber 110 may include a heated interior. Thus, atomization system 100 may include a heater 124. Heater 124 may include an electric heating element, for example, a resistive heating element, or any other suitable mode of heat transfer. In some examples, heater 124 is located outside atomization nozzle 120, for example, in, along, adjacent, or about atomization fluid feed line 130, or adjacent or within solidification chamber 110. In other examples, atomization system 100 does not include a heater.

The heater 124 may be positioned external to solidification chamber 110 (as shown in FIG. 1), or may be positioned within an interior of solidification chamber 110. The heater 124 may introduce a stream of heated fluid, for example, heated air, heated nitrogen, or some other heated fluid, into solidification chamber 110. In some examples, heater 124 may include a fan, a blower, or a pump, configured to introduce heated fluid at a predetermined pressure and/or velocity within an interior of solidification chamber 110. For example, the residence time of atomization material introduced via atomization nozzle 120 into the interior of solidification chamber 110 may be increased by a forced flow of heated fluid introduced by heater 124, which may promote complete drying of droplets before reaching a bottom of solidification chamber 110. In some examples, solidification chamber 110 may include a heat transfer system, for example, a heat exchanger or piping, and a heated stream from heater 124 may be transported through the heat transfer system to heat the interior of solidification chamber 110.

The atmosphere within solidification chamber 110 may include, for example, air, an inert atmosphere, a reduced pressure atmosphere, or the like. In some examples, the atmosphere may be selected based on the type (e.g., composition) of particulates being formed using atomization system 100. For example, a reduced pressure atmosphere may be used to induce vaporization of atomization fluid from droplets, promoting relatively rapid drying of droplets formed by nozzle 120 from the atomization material.

Solidification chamber 110 may further include a fan, a blower, or other motive element configured to induce a flow of gas, droplets, or particulates within an interior of solidification chamber 110, which may promote drying or particle size growth from an initial particle size to a final particle size.

While atomization system 100 includes solidification chamber 110, in other examples, atomization system 100 may not include solidification chamber 110. One, more than one, or all components of atomization system 100 may be free of a chamber, or of an enclosed chamber. For example, atomization system 100 may include an open chamber or open container that receives particulates formed by drying of droplets in ambient conditions introduced by atomization nozzle 120.

Atomization nozzle 120 is coupled to an atomizing fluid feed line 130 via fluid inlet port 134. Atomizing fluid feed line 130 may be coupled to an atomizing fluid source 122 by the atomizing fluid feed line 130 external to solidification chamber 110. Atomizing fluid feed line 130 may provide a fluid flow from the atomizing fluid source 122 to fluid inlet port 134 of atomization nozzle 120. In some examples, atomization system 100 may further include a pump (or some motive element) configured to transport atomizing fluid from the atomizing fluid source 122 to the atomization nozzle 120. The atomizing fluid source 122 includes an atomizing fluid for mixing or carrying atomization material introduced from a material source. For example, if the atomization material is initially in the form of a solid (for example, a coarse powder or beads), a gel, a viscous material, or even a liquid, a solution, or suspension, the carrier fluid may dissolve, suspend, thin, mix with, or otherwise combine with the atomization material before introduction into atomization nozzle 120, or after introduction but before exiting atomization nozzle 120. Thus, while the carrier fluid may be contacted with the atomization material within nozzle 120 (as shown in FIG. 1), in other examples, the carrier fluid may be contacted with the atomization material external to nozzle 120.

In some examples, system 100 may include a mixing chamber (not shown) prior to nozzle 120, such that nozzle 120 receives a solution, a suspension, a mixture, or some other combination of the carrier fluid and the atomization material. In some examples, heater 124, or another heater, may heat atomizing fluid in one or more of atomizing fluid source 122, atomizing fluid feed line 130, at fluid inlet port 134, or in the nozzle 120.

Atomization nozzle 120 may further include a material inlet port 128, which is coupled to an atomization material feed line 150. Atomization material feed line 150 may be coupled to a material source 152 that is located external to solidification chamber 110. System 100 may further include a material pump 138 (or some other motive element) to promote flow of atomization material from material source 152 toward atomization nozzle 120. Atomization material may be fed through material feed line 150 in a liquid form (for example, a solution, or a suspension), a solid form (for example, a powder or a coarse particulate or beads), or some other form (for example, a gel), and may mix with atomization fluid from atomization fluid feed line 130 (for example, within or prior to atomization nozzle 120). The composition of the atomization material may be based upon the composition of the particulate product to be formed by atomization system 100.

In some examples, system 100 may not include an atomizing fluid source 122. For example, the atomizing material itself may be fluid, or may be mixed with a carrier fluid in material source 152.

In some examples, atomization nozzle 120 may be heated by heater 124, or by another heater, for example, to heat the atomization material to promote drying of droplets eventually formed by atomization nozzle 120. For example, a heated atomization nozzle 120 may be used to raise the temperature of the atomization material from an initial or ambient temperature into an elevated temperature which may approach a drying temperature of the atomization material. Such pre-heating of atomization material before atomization nozzle 120 introduces the atomization material into solidification chamber 110 may promote relatively rapid drying of droplets into solid particulates in solidification chamber 110, or may allow drying of droplets at a relatively lower temperature within solidification chamber 110.

As shown in FIG. 1, a dispersed stream 136 exits an outlet 126 of atomization nozzle 120. Dispersed stream 136 may include the atomization material carried by the carrier fluid. Outlet 126 may be configured and positioned to direct the dispersed stream within an interior of solidification chamber 110, to cause particulates to form from dispersed stream 136. For example, dispersed stream 136 may include droplets, a spray, or some other dispersion of a solution or a suspension of atomization material, which is dried in solidification chamber 110 to form a particulate product. The particulate product may be collected at a bottom of solidification chamber 110, and drawn from a product outlet 112.

Solidification chamber 110 may further include a fines outlet 114. While a portion of dispersed stream 136 may form particulate product that settles or drops to a bottom of solidification chamber 110, another portion of dispersed stream 136 may form finer particulates that may not conform to specifications. Such finer particulates may be withdrawn from fines outlet 114. Atomization system 100 may further include a cyclone 116 coupled to one or both of product outlet 112 or fines outlet 114. Cyclone 116 may generate a centrifugal flow of particulates from product outlet 112 or fines outlet 114, and separate the particulates into a first fraction that may conform to specifications, and ultimately drawn and combined with the final product, and into a second fraction that does not conform to specifications. The second fraction may be discarded, or reintroduced into nozzle 120 (for example, via recirculation to material source 152).

The final product (drawn from one or both of product outlet 112 or cyclone 116) includes particulate material or powder. The particulate material may include unitary particles, or agglomerates. The particulate material may have any suitable average or maximum particle size or a particle size distribution, based on product specifications.

Various components and streams of atomization system 100 may be acoustically monitored. For example, atomization system 100 includes at least one acoustic sensor 140. In some examples, as shown in FIG. 1, atomization system 100 includes a plurality of acoustic sensors, such as at least two acoustic sensors 140. Each of the at least one acoustic sensor 140 is configured to sense acoustic signals 132 (e.g., sound). Acoustic signals 132 may be generated by one or more components or processes of atomization system 100. The at least one acoustic sensor 140 may include, for example, an acoustic sensing element such as a microphone or a sound-to-electric transducer or electromagnetic, capacitive, or piezoelectric elements that generate an electrical signal in response to incident sound waves.

The at least one acoustic sensor 140 may be configured to sense acoustic signals 132 with a predetermined wavelength or wavelength range. In some examples, the at least one acoustic sensor 140 may be configured to sense acoustic signals 132 that may or may not be detectable by human hearing, including infrasound and ultrasound. In some examples, acoustic signals 132 may include frequencies below about 20Hz, from about 20 Hz to about 20 kHz, from about 20 kHz to about 2MHz, higher than about 2 MHz, or combinations thereof. Each acoustic sensor of the at least one acoustic sensor 140 is configured to generate a respective time-dependent acoustic data signal of at least one time-dependent acoustic data signal 142 based on the sensed acoustic signal 132 and communicate at least one time-dependent acoustic data signal 142 to computing device 180. In some examples, at least one time-dependent acoustic data signal 142 includes a digital data signal, and at least one acoustic sensor 140 includes an analog-to-digital converter. In other examples, at least one time-dependent acoustic data signal 142 may include an analog signal. In some examples, at least one acoustic sensor 140 may include an amplifier to amplify the signal sensed by at least one acoustic sensor 140 and produce the at least one time-dependent acoustic data signal 142. At least one acoustic sensor 140 may transmit at least one time-dependent acoustic data signal 142 using electrical signals, Bluetooth, Wi-Fi, radio, or any other suitable transmission pathway.

Computing device 180 may be configured to control operation of one or more components of atomization system 100 automatically or under control of a user. For example, computing device 180 may be configured to control operation of one or more of solidification chamber 110, atomization nozzle 120, atomizing fluid source 122, heater 124, atomization fluid feed line 130, material feed line 150, material source 152, cyclone 116, at least one acoustic sensor 140, and the like. Computing device 180 also may be configured to receive at least one time-dependent acoustic data signal 142 from at least one acoustic sensor 140 and analyze the at least one time-dependent acoustic data signal 142 to determine one or more process attributes of atomization system 100.

During an atomization process, atomization system 100 performs at least one process, such as causing dispersion of atomization material via nozzle 120 into solidification chamber 110. Atomization system 100 and the atomization process performed by atomization system 100 possess a plurality of process attributes. The process attributes may include process parameters, component wear, and the like. Process parameters may deviate from designed or nominal values. Computing device 180 may be configured to compare the process deviations to the nominal or designed process parameters. For example, process parameters may include at least one of a temperature, a pressure, a mass flow rate, a volumetric flow rate, a molecular flow rate, a molar flow rate, a composition or a concentration, of a flowstream flowing through atomization system 100, for instance, of fluid flowing through atomizing fluid feed line 130, or of dispersed stream 136, or of material flowing through material feed line 150, or of product exiting product outlet 112, fines outlet 114, or cyclone 116. In some examples, the process deviations may include at least one of material feed fluctuation, for instance, pulsing or flow blockage (for e.g., of one or more of atomizing fluid feed line 130, dispersed stream 136, material feed line 150), leakage, or a process deviation resulting from incompatibility (for e.g., wrong type or configuration of a component, for instance, using a nozzle that is unsuitable for a particular type of atomization material) or wear or blockage of the at least one component. In some examples, wear or blockage of the at least one component may include wear or blockage of atomization nozzle 120, including wear or blockage of atomization outlet 126 or of an interior channel or a nozzle of atomization nozzle 120, or wear or blockage of ports such as product outlet 112, fines outlet 114, cyclone 116, material inlet port 128, fluid inlet port 134, for instance.

As described above, components of atomization system 100 and processes performed by atomization system 100 generate acoustic signals 132 during the atomization process. For example, acoustic signals 132 may originate from product outlet 112, fines outlet 114, cyclone 116, atomization nozzle 120 (e.g., heater 124, atomization outlet 126, material inlet port 128, or atomizing fluid inlet port 134), atomizing fluid feed line 130, dispersed stream 136, atomization material feed line 150, drying of the atomization material within solidification chamber 110, or any other component associated with atomization system 100, such as a atomization material hopper, a atomization material feeder, a nozzle or part manipulating robot or machine, an air handling system, a dust filtering system, or the like.

Acoustic signals 132 generated by the components depend on process attributes, and may change in response to process attributes changing. For example, acoustic signals 132 produced by atomizing fluid feed line 130 may change in response to any one or more of the temperature, pressure, flowrate, viscosity, composition, or concentration of the flowstream in atomizing fluid feed line 130 changing. Similarly, acoustic signals 132 produced by material feed line 150 may change in response to any one or more of the temperature, pressure, flowrate, viscosity, composition, or concentration of the atomization material in material feed line 150 changing. Acoustic signals 132 produced by dispersed stream 136 may change in response to, for example, any one or more of the temperature, pressure, flowrate, viscosity, composition, or concentration of dispersed stream 136 or the environment within solidification chamber 110 changing. Acoustic signals 132 produced by product outlet 112, fines outlet 114, or cyclone 116 may change in response to any one or more of the temperature, pressure, flowrate, viscosity, composition, or concentration of the atomization material or particulate product formed by solidification chamber 110 the spray target changing.

In some examples, respective process attributes may be associated with one or more respective frequency bands within acoustic signals 132. For example, a peak frequency may be associated with spray outlet 126, such as a spray nozzle, and may change as the spray outlet 126 mechanically wears. Other process attributes may similarly be associated with respective frequencies or frequency bands, which may change in frequency value, intensity, or the like, based on the value of the process attribute.

In some examples, acoustic signals 132 may be affected by the portion of the atomization process which is being performed. For example, acoustic signals 132 generated during an initial startup period by components of atomization system 100 may differ from acoustic signals 132 generated when atomization system 100 is performing a spraying process, or acoustic signals 132 generated when atomization system 100 is being shut down. Hence, computing device 180 may analyze at least one time-dependent acoustic data signal 142 to determine at which portion of the atomization process atomization system 100 is, or a user may identify the portion of the atomization process at which atomization system 100 is, and computing device 180 may utilize this information when analyzing at least one time-dependent acoustic data signal 142.

Other factors may result in acoustic signals 132 changing. For example, acoustic signals 132 generated by components of atomization system 100 in a first configuration may differ acoustic signals 132 generated in a second configuration. In some examples, computing device 180 may analyze a respective time-dependent acoustic data signal of at least one time-dependent acoustic data signal 142 to identify the configuration of components of atomization system 100, or the stage or progress of a process performed by atomization system 100, or a stage or progress of a subprocess performed by one or more components of atomization system 100. In some examples, computing device 180 may identify the process stage at which atomization system 100 is operating by comparing a respective time-dependent acoustic data signal of at least one time-dependent acoustic data signal 142 of atomization system 100 in the unknown process stage to a time-dependent acoustic data signal from a known configuration or process stage of an atomization system.

In some examples, at least one acoustic sensor 140 may be configured to enhance detection of one or more acoustic signal of acoustic signals 132 compared to another one or more acoustic signal of acoustic signals 132. For instance, a first acoustic sensor of at least one acoustic sensor 140 may be positioned adjacent to a selected component of atomization system 100, oriented toward a selected component of atomization system 100, or the like to enhance detection of a selected acoustic signal of acoustic signals 132 compared to another one or more acoustic signal of acoustic signals 132. For example, a first acoustic sensor of at least one acoustic sensor 140 may be positioned to sense acoustic signals 132 originating from atomization nozzle 120 (e.g., material inlet port 128, atomizing fluid inlet port 134, spray outlet 126), and a second acoustic sensor of at least one acoustic sensor 140 may be positioned to sense acoustic signals 132 originating from material feed line 150. The at least one acoustic sensor 140 may be located near a component or at a zone within the atomization system 100, or may be oriented towards a component to sense sound from the component, or otherwise more accurately attribute the sound to a source. In an example, at least one acoustic sensor 140 may include multiple acoustic sensors forming an acoustic sensor network that captures sound generated by various components of atomization system 100.

As described above, computing device 180 may analyze at least one time-dependent acoustic data signal 142 to determine information about one or more process attributes of atomization system 100, which may include, for example, a component configuration, component wear or blockage, process parameters, or process deviations of atomization system 100. For example, computing device 180 may be configured to receive the at least one time-dependent acoustic data signal 142, transform the at least one time-dependent acoustic data signal 142 to a frequency-domain spectrum, and determine a process attribute by identifying at least one characteristic of the frequency-domain spectrum. As described above, each of the plurality of process attributes of atomization system 100 may be associated with at least one respective frequency band. In some examples, computing device 180 may analyze at least one time-dependent acoustic data signal 142 to determine whether process attributes associated with the process performed by atomization system 100 are within a nominal or expected range, or if the process attributes are varying compared to the nominal or expected range.

In some examples, because of the different positions of at least one acoustic sensor 140, computing device 180 may analyze the at least time-dependent acoustic data signal 132 to determine information related to particular components of atomization system 100. For example, computing device 180 may utilize the intensity of respective frequency components of at least one time-dependent acoustic data signal 142 to determine a distance from the acoustic sensor from which the at least one time-dependent acoustic data signal 142 was received to the component generating the acoustic signal, and may attribute the acoustic signal to that component. Additionally or alternatively, computing device 180 may utilize data indicative of the position and/or orientation of the acoustic sensor from which the at least one time-dependent acoustic data signal 142 was received relative to a selected component to the acoustic signal to a component. In this way, computing device 180 may analyze the at least one time-dependent acoustic data signal 142 or multiple time-dependent acoustic data signals to determine process attributes for a plurality of components of the atomization system.

In some examples, computing device 180 may analyze at least one acoustic data signal 142 to identify process attributes, including process parameters, component wear or blockage, or both that may result in unsatisfactory product characteristics or other undesirable conditions of atomization system 100. In some examples, by utilizing at least one time-dependent acoustic data signal 142, computing device 180 may perform real-time or near-real-time analysis of the operation of atomization system 100. For example, monitoring a signal representative of one or more outputs of atomization system 100 may provide a more accurate indication of process attributes of atomization system 100, e.g., compared to monitoring inputs to atomization system 100 using a flow meter, flow controller, amp meter, or voltmeter.

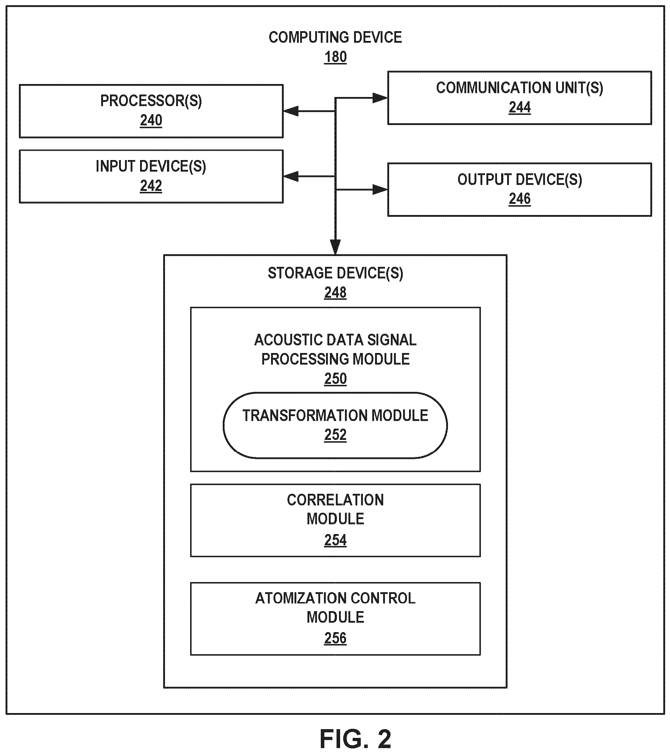

FIG. 2 is a conceptual block diagram illustrating an example of computing device 180 illustrated in FIG. 1. In some examples, computing device 180 may include, for example, a desktop computer, a laptop computer, a workstation, a server, a mainframe, a cloud computing system, or the like. In some examples, computing device 180 controls the operation of system 100, including, for example, solidification chamber 110, cyclone 116, atomization nozzle 120, heater 124, atomization fluid feed line 130, dispersed stream 136, acoustic sensors 140, atomization material feed 150, and spray target 160.

In the example illustrated in FIG. 2, computing device 180 includes one or more processors 240, one or more input devices 242, one or more communication units 244, one or more output devices 246, and one or more storage devices 248. In some examples, one or more storage devices 248 stores acoustic data signal processing module 250, transformation module 252, correlation module 254, or additive manufacturing module 256. In other examples, computing device 180 may include additional components or fewer components than those illustrated in FIG. 2.

One or more processors 240 are configured to implement functionality and/or process instructions for execution within computing device 180. For example, processors 240 may be capable of processing instructions stored by storage device 248. Examples of one or more processors 40 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 248 may be configured to store information within computing device 180 during operation. Storage devices 248, in some examples, include a computer-readable storage medium or computer-readable storage device. In some examples, storage devices 248 include a temporary memory, meaning that a primary purpose of storage device 248 is not long-term storage. Storage devices 248, in some examples, include a volatile memory, meaning that storage device 248 does not maintain stored contents when power is not provided to storage device 248. Examples of volatile memories include random access memories (RAM), dynamic random access memories (DRAM), static random access memories (SRAM), and other forms of volatile memories known in the art. In some examples, storage devices 248 are used to store program instructions for execution by processors 240. Storage devices 248, in some examples, are used by software or applications running on computing device 180 to temporarily store information during program execution.

In some examples, storage devices 248 may further include one or more storage device 248 configured for longer-term storage of information. In some examples, storage devices 248 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 180 further includes one or more communication units 244. Computing device 180 may utilize communication units 244 to communicate with external devices (e.g., atomization nozzle 120, atomization fluid feed line 130, dispersed stream 136, acoustic sensor 140, atomization material 150) via one or more networks, such as one or more wired or wireless networks. Communication unit 244 may include a network interface card, such as an Ethernet card, an optical transceiver, a radio frequency transceiver, or any other type of device that can send and receive information. Other examples of such network interfaces may include WiFi radios or Universal Serial Bus (USB). In some examples, computing device 180 utilizes communication units 244 to wirelessly communicate with an external device such as a server.

Computing device 180 also includes one or more input devices 242. Input devices 242, in some examples, are configured to receive input from a user through tactile, audio, or video sources. Examples of input devices 242 include a mouse, a keyboard, a voice responsive system, video camera, microphone, touchscreen, or any other type of device for detecting a command from a user.

Computing device 180 may further include one or more output devices 246. Output devices 246, in some examples, are configured to provide output to a user using audio or video media. For example, output devices 246 may include a display, a sound card, a video graphics adapter card, or any other type of device for converting a signal into an appropriate form understandable to humans or machines. In some example, computing device 180 outputs a representation of one or more of the at least one time-dependent acoustic data signal 142, of the frequency-domain spectrum, of the at least one characteristic of the frequency-domain spectrum, or of the process attribute that the at least one characteristic is indicative of, via output devices 246.

In some examples, computing device 180 may generate an alert in response to the least one attribute, via output devices 246. For example, computing device 180 may generate auditory signals, such as a beep, an alert tone, or an alerting sound, or visual signals, such as an icon on a display, flashing lights, or a combination of visual and audible signals, to indicate a process attribute variance or a process attribute deviation. In some examples, the alert signal may indicate a particular component in need of maintenance or replacement, for example, atomization nozzle 120, or another component. In some examples, an operator may thus be alerted, and may choose to investigate atomization system 100. As another example, computing device 180 may generate an alert that is transmitted over a network to another computing device, including a hand-held computing device, for instance, a cellphone. The alert signal may include information about the process attribute, for instance, a process parameter, or a variance in the process parameter, or a process deviation status, or an identification of the process deviation.

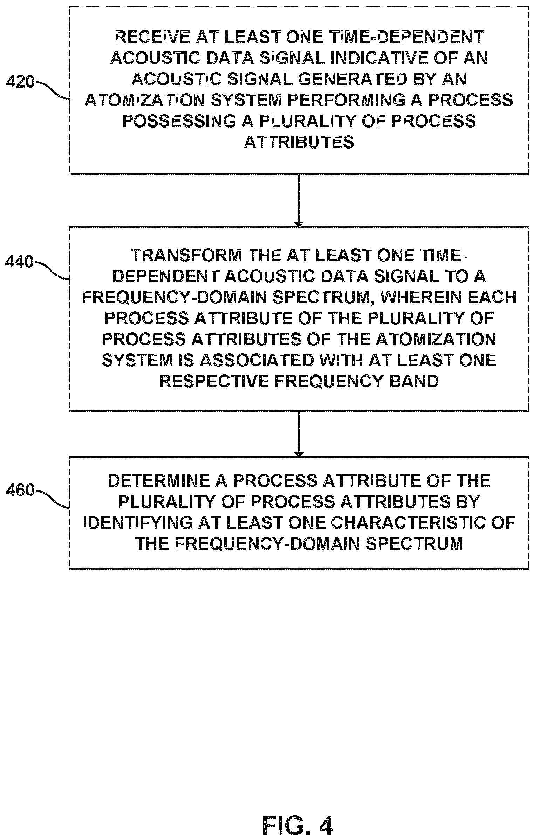

Computing device 180 also may include an acoustic data signal processing module 250 and a correlation module 254. In some examples, acoustic data signal processing module 250 pre-processes or processes at least one time-dependent acoustic data signal 142 to prepare at least one time-dependent acoustic data signal 142 for analysis by correlation module 254, and correlation module 254 analyzes at least one time-dependent acoustic data 142 signal to determine the process attribute. In some examples, acoustic data signal processing module 250 may include a transformation module 252 for transforming at least one time-dependent acoustic data signal 142 from a time-domain spectrum to a frequency-domain spectrum. Functions performed by acoustic data signal processing module 250, transformation module 252 and correlation module 254 are explained below with reference to the example flow diagram illustrated in FIG. 4.

Acoustic data signal processing module 250, transformation module 252, and correlation module 254 may be implemented in various ways. For example, acoustic data signal processing module 250, transformation module 252, and/or correlation module 254 may be implemented as software, such as an executable application or an operating system, or firmware executed by one or more processors 240. In other examples, acoustic data signal processing module 250, transformation module 252, and/or correlation module 254 may be implemented as part of a hardware unit of computing device 180. In some examples, acoustic data signal processing module 250 includes transformation module 252, as shown in FIG. 2. In some examples, transformation module 252 is separate from acoustic data signal processing module 250.

In some examples, the alert signal may indicate a completion of a batch of product. In some examples, the alert signal may indicate a deviation of the product being formed in solidification chamber 110 from product specifications. Thus, an operator may investigate atomization system 100 to inspect and/or diagnose one or more components to determine potential causes of deviation.

Computing device 180 also may include atomization control module 256. Atomization control module 256 may be configured to, based on predetermined product specifications, control one or more components of atomization system 100 to cause the particulate product to be formed in solidification chamber 110. For example, atomization control module 256 may send a control signal to one or more components, or receive a signal from one or more sensors. In some examples, the control signal controls at least one pump configured to cause flow of fluid or material to or through atomization nozzle 120.

Computing device 180 may include additional components that, for clarity, are not shown in FIG. 2. For example, computing device 180 may include a power supply to provide power to the components of computing device 180. Similarly, the components of computing device 180 shown in FIG. 2 may not be necessary in every example of computing device 180.

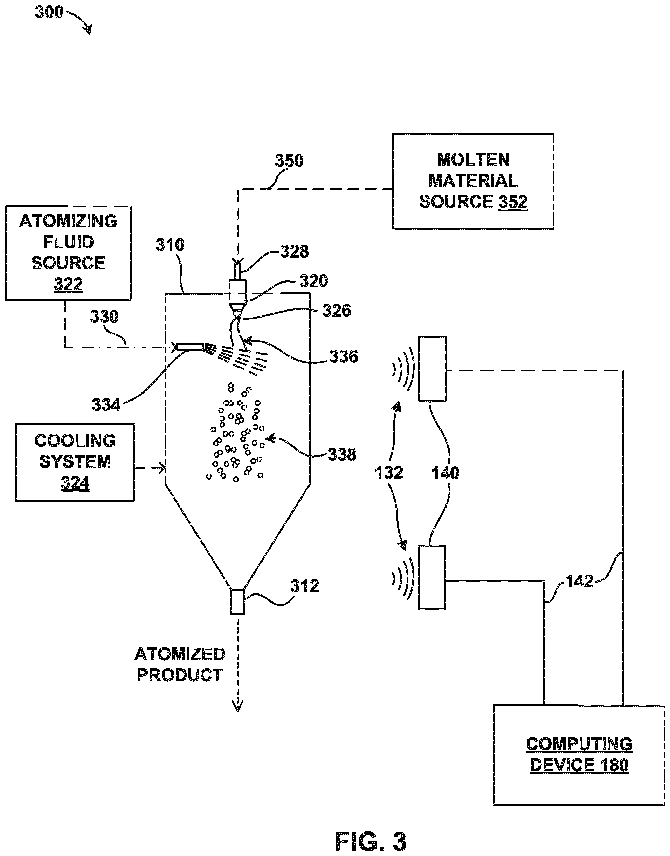

FIG. 3 is a conceptual block diagram illustrating an example metal atomization system 300. Certain components of system 300 function in a manner similar to corresponding components of system 100 of FIG. 1, and like components are numbered similarly. In some examples, metal atomization system 300 includes components such as a solidification chamber 310, an atomization nozzle 320, at least one acoustic sensor 140, and a computing device 180.

At least one acoustic sensor 140 may be positioned external to solidification chamber 310, as shown in FIG. 3. In some examples, solidification chamber 310 may enclose a portion of, or an entirety of atomization nozzle 320. In further examples, only a tip portion of atomization nozzle 320 may extend into solidification chamber 310, with a remaining portion of atomization nozzle 320 extending external to solidification chamber 310.

The interior of solidification chamber 310 may be maintained at ambient temperature, or may be cooled. For example, the atomization material may include a molten metal or alloy composition to be introduced into solidification chamber 310 and solidified to form a particulate product, and solidification chamber 310 may include a cooled interior, or an uncooled interior that is yet cooler than the atomization material. Thus, metal atomization system 300 may include a cooling system 324. Cooling system 324 may include a refrigerant, a cooling fluid, or any other suitable mode of heat transfer. In some examples, cooling system 324 is located outside solidification chamber 310, within solidification chamber 310, or in contact with an external wall of solidification chamber 310. In other examples, metal atomization system 300 does not include a cooler.

The cooling system 324 may be positioned external to solidification chamber 310 (as shown in FIG. 3), or may be positioned within an interior of solidification chamber 310. The cooling system 324 may introduce a stream of cooled fluid or refrigerant, for example, cooled air, cooled nitrogen, or some other cooled fluid, into solidification chamber 310. In some examples, cooling system 324 may include a fan, a blower, or a pump, configured to introduce cooled fluid at a predetermined pressure and/or velocity within an interior of solidification chamber 310. For example, the residence time of atomization material introduced via atomization nozzle 320 into the interior of solidification chamber 310 may be increased by a forced flow of cooled fluid introduced by cooling system 324, which may promote complete solidification of droplets of molten material before reaching a bottom of solidification chamber 310. In some examples, solidification chamber 310 may include a heat transfer system, for example, a heat exchanger or piping, and a cooled stream from cooling system 324 may be transported through the heat transfer system to cool the interior of solidification chamber 310.

The atmosphere within solidification chamber 310 may include, for example, air, an inert atmosphere, a reduced pressure atmosphere, or the like. In some examples, the atmosphere may be selected based on the type (e.g., composition) of particulates being formed using metal atomization system 300. For example, an inert atmosphere may be used to deter oxidation of metal or alloy particles formed from molten droplets.

Solidification chamber 310 may further include a fan, a blower, or other motive element configured to induce a flow of gas, droplets, or particulates within an interior of solidification chamber 310, which may promote cooling of molten droplets to form solidified particulates.

While metal atomization system 300 includes solidification chamber 310, in other examples, metal atomization system 300 may not include solidification chamber 310. One, more than one, or all components of metal atomization system 300 may be free of a chamber, or of an enclosed chamber. For example, metal atomization system 300 may include an open chamber or open container that receives particulates formed by cooling and solidification of molten droplets in ambient conditions introduced by atomization nozzle 320.

Atomization nozzle 320 may be coupled to a material inlet port 328, which is coupled to a molten material feed line 350. Molten material feed line 350 may be coupled to a molten material source 352 that is located external to solidification chamber 310.

In other examples, depending on the temperature of the molten material, system 300 may not include a molten material feed line 350, and atomization nozzle 320 may be directly connected to, extend from, or be integral with molten material source 352. For example, molten material source 352 may include a tank connected to or defining the atomization nozzle 320, and molten material may directly flow from the tank to atomization nozzle 320.

In some examples, atomization nozzle 320 may be cooled by cooling system 324, or by another cooling system, for example, to pre-cool the molten atomization material to promote solidification of droplets eventually formed by metal atomization system 300. For example, a cooled atomization nozzle 320 may be used to cool the temperature of the molten atomization material from an initial melt temperature to a partially cooled temperature that approaches a solidification temperature of the atomization material. Such pre-cooling of atomization material before atomization nozzle 320 introduces the molten atomization material into solidification chamber 310 may promote relatively rapid cooling of molten droplets into solid particulates in solidification chamber 310, or may allow solidification of droplets at a relatively higher temperatures within solidification chamber 310 (for example, without requiring significant cooling within solidification chamber 310, or at ambient or higher temperatures within solidification chamber 310).

As shown in FIG. 1, a molten stream 336 exits an outlet 326 of atomization nozzle 320. Molten stream 136 includes a stream or a flow of molten atomization material, which may be continuous, or somewhat interrupted or dispersed. Molten stream 336 may emerge from outlet 326 under the influence of gravity. Outlet 326 may be configured and positioned to direct molten stream 336 toward an interior of solidification chamber 310, to cause solid particulates to ultimately form by cooling of molten stream 336. For example, molten stream 136 may form molten droplets in course of emerging from outlet 326, or break up into molten droplets in response to gravitational force, which molten droplets may solidify in solidification chamber 310 to form a particulate product.

In some examples, metal atomization system introduces an atomizing fluid to promote dispersion of droplets from molten stream 336. For example, an atomizing fluid (a liquid or a gas) may be introduced from an atomizing fluid source 322 via an atomizing fluid feed line 330 via fluid spray nozzle 334. In some examples, metal atomization system 300 may further include a pump (or some motive element) configured to transport atomizing fluid from the atomizing fluid source 322 to the fluid spray nozzle 334. Spray nozzle may introduce a stream of atomizing fluid to contact molten stream 336, which in turn induces formation of droplets 338 from molten stream 336. For example, the atomizing fluid may one or both of mechanically agitate or cool molten stream 336 to form droplets 338. Droplets 338 may continue to solidify and/or cool after contact with the stream of atomizing fluid in course of dropping through the solidification chamber 310. The atomizing fluid may include water, air, nitrogen, or any other suitable fluid. In some examples, system 100 may not include an atomizing fluid source 122. For example, molten stream 336 may form droplets and solidify in response to the temperature and/or pressure conditions within solidification chamber 310. In some examples, solidification chamber 310 may contain a volume of water or some other fluid that may promote formation and/or cooling of droplets 338 from molten stream 336.

The particulate product may be collected at a bottom of solidification chamber 310, and drawn from a product outlet 312. The final product (for example, drawn from product outlet 312) includes particulate material or powder. The particulate material may include unitary particles, or agglomerates. The particulate material may have any suitable average or maximum particle size or a particle size distribution, based on product specifications.

Various components and streams of metal atomization system 300 may be acoustically monitored. For example, metal atomization system 300 includes at least one acoustic sensor 140 and computing device 180. Acoustic sensor 140 and computing device 180 may be used in a manner similar to that described with reference to FIGS. 1, 2, and 4.

Examples of atomization system 100, computing device 180, and metal atomization system 300 are described with reference to FIGS. 1 to 3 above, including examples of at least one acoustic sensor 140 for generating at least one time-dependent acoustic data signal 142 indicative of acoustic signals 132 generated by atomization system 100. Example techniques for analyzing at least one time-dependent data signals to determine a process attribute of a process performed by atomization system 100 are described with reference to FIG. 4 below.

FIG. 4 is a flow diagram illustrating an example technique for analyzing an acoustic signal generated by an atomization system performing a process possessing a plurality of process attributes to determine a process attribute of the plurality of process attributes. In some examples, a computing device, such as computing device 180, may implement the technique of FIG. 4 to analyze the at least one time-dependent signal 142 indicative of acoustic signals 132 generated by atomization system 100 performing a process possessing a plurality of process attributes, described in various examples with reference to FIG. 1 above, to determine a process attribute of the plurality of process attributes. The technique of FIG. 4 will be described with reference to atomization system 100 of FIG. 1, and computing device 180 of FIGS. 1 and 2, for purposes of description only. It will be appreciated that the technique of FIG. 4 may be used to analyze at least one acoustic data signal to determine a process attribute of processes performed by other atomization systems (for example, atomization system 300 described with reference to FIG. 3), that other computing devices may implement the technique of FIG. 4, or both.

The technique of FIG. 4 includes receiving, by computing device 180, from at least one acoustic sensor 140, at least one time-dependent acoustic data signal 142 indicative of acoustic signals 132 generated by atomization system 100 (420). In some examples, at least one time-dependent acoustic data signal 142 may include analog signals, and acoustic data signal processing module 250 of computing device 180 may process at least one acoustic data signal 142 by performing an analog-to-digital conversion. In other examples, the received at least one time-dependent acoustic data signal 142 may include digital signals and acoustic data signal processing module 250 may not perform analog-to-digital conversion of at least one time-dependent acoustic data signal 142. In some examples, acoustic data signal processing module 250 of computing device 180 may filter at least one acoustic data signal 142 through signal processing filters such as band pass filters, high pass filters, low pass filters, comb filters, notch filters, or other filters, for instance, deconvolution filters, or noise filters to filter out undesirable signal components, such as noise, superfluous signal components, such as harmonics, or to reduce or compress the information in at least one acoustic data signal 142.

The technique of FIG. 4 also includes transforming, by transformation module 252 of computing device 180, at least one time-dependent acoustic data signal 142 to a frequency-domain spectrum (440). The frequency-domain spectrum may include intensity or amplitude as a function of frequency. In some examples, transformation module 252 of computing device 180 transforms at least one time-dependent acoustic data signal 142 to a frequency-domain spectrum using at least one of a fast Fourier transform or a discrete Fourier transform. In some examples, transformation module 252 may perform the transformation before, during or after other processing such as filtering described above.

The technique of FIG. 4 further includes determining, by correlation module 254 of computing device 180, a process attribute of the plurality of process attributes by identifying at least one characteristic of the frequency-domain spectrum (460). As described above, in some examples, each process attribute of the plurality of process attributes is associated with at least one respective frequency band in the frequency-domain spectrum. For example, nozzle wear of atomization nozzle 120 may be associated with a first frequency band, and atomizing fluid flow through atomization fluid feed line 130 may be associated with a second frequency band. Other examples are also contemplated, for example, those described with respect to FIG. 1. Therefore, correlation module 254 may determine the process attribute based at least in part on the identified at least characteristic of the frequency-domain spectrum according to one or more example techniques described below.

Computing device 180 may identify at least one characteristic of the frequency-domain spectrum using one or more of the example techniques described below. In some examples, correlation module 254 may analyze the entire frequency-domain spectrum to identify at least one characteristic of the frequency-domain spectrum (460). For example, correlation module 254 may compare the entire frequency-domain spectrum with a second frequency-domain spectrum to identify at least one characteristic of the frequency-domain spectrum (460). In some examples, the second frequency-domain spectrum may be a known or reference frequency-domain spectrum, such as sample frequency-domain spectrum obtained from another known atomization system performing a known atomization process or a calculated frequency-domain spectrum. In this way, correlation module 254 may compare the entire frequency-domain spectrum to a frequency-domain spectrum representative of expected operation of atomization system 100.

In other examples, the second frequency-domain spectrum may be a past frequency-domain spectrum obtained from at least one time-dependent acoustic data signal 142 over a past interval of time from atomization system 100. The second frequency-domain spectrum may include, for example, a past frequency-domain spectrum obtained during the process, so that correlation module 254 compares the frequency-domain spectrum at a present interval of time with the frequency-domain spectrum at a past interval of time to identify the at least one characteristic. In this way, correlation module 254 may identify changes of the frequency-domain spectrum relative to past operation of atomization system 100 and may determine changes over time of operation of atomization system 100.

In some examples, correlation module 254 may then determine the process attribute by at least selecting at least one of a representative frequency or a representative intensity of the frequency within the frequency-domain spectrum as the at least one characteristic based on the comparison of the entire frequency-domain spectrum with the known frequency-domain spectrum (460). For example, correlation module 254 may identify at least one frequency for which an intensity has changed between the second frequency-domain spectrum and the frequency-domain spectrum determined based on at least one time-dependent acoustic data signal 142, and may select that frequency as the process attribute or for use in determining the process attribute. In some examples, correlation module 254 may identify a plurality of respective frequencies for which a respective intensity has changed between the second frequency-domain spectrum and the frequency-domain spectrum determined based on at least one time-dependent acoustic data signal 142, and may select each respective frequency as a process attribute or for use in determining a respective process attribute. In this way, in some examples, correlation module 254 may determine a plurality of process attributes for atomization system 100 based at least in part on at least one time-dependent acoustic data signal 142.

In other examples, instead of analyzing the entire frequency-domain spectrum, correlation module 254 may analyze a selected portion of the frequency-domain spectrum to identify at least one characteristic of the frequency-domain spectrum (460). For example, identifying at least one characteristic of the frequency-domain spectrum (460) may include filtering, by acoustic data signal processing module 250, the at least one time-dependent acoustic data signal 142 to select a frequency band prior to transforming, by transformation module 252, at least one time-dependent acoustic data signal 142 to the frequency-domain spectrum (440), or selecting, by acoustic data signal processing module 250, a frequency band from the frequency-domain spectrum. In some examples, identifying the at least one characteristic of the frequency-domain spectrum (460) may further include analyzing, by correlation module 254, the selected frequency band to identify at least one characteristic of the frequency-domain spectrum (460). In some examples, correlation module 254 may compare the selected frequency band with a second frequency band, which may be analogous to the second frequency-domain spectrum described above. For example, the second frequency band may be a known or reference frequency-domain spectrum or may be a past frequency-domain spectrum obtained from at least one time-dependent acoustic data signal 142.

In some examples, determining the process attribute may include selecting, by correlation module 254, at least one of a frequency or an intensity of the frequency within the selected frequency band as the at least one characteristic based on the comparison of the selected frequency band with the known frequency band (460). For example, correlation module 254 may extract a plurality of intensities from a selected frequency band of the frequency-domain spectrum, each intensity of the plurality of intensities corresponding to a respective frequency of a plurality of frequencies within the selected frequency band. In some examples, correlation module 254 may select at least one of an intensity of the plurality of intensities or the respective frequency of the plurality of frequencies as the at least one characteristic. In some examples, correlation module 254 may identify the maximum intensity of the plurality of intensities and select at least one of the maximum intensity (for instance, peal intensity) or the frequency associated with the maximum intensity (for instance, peak frequency) as the at least one characteristic.

In some examples, after determining the at least one characteristic of the frequency-domain spectrum, correlation module 254 may compare the at least one characteristic with a characteristic value or range of characteristic values to determine the process attribute (460). The at least one characteristic and the known or expected characteristic value or range of characteristic values may relate to aspects of process attributes (e.g., magnitude, variation, or the like), which may be associated with frequency values within a frequency band, may be associated with intensities of one or more frequencies within a frequency band, or both. For example, the magnitude of a process attribute may be related to the magnitude of intensities of at least one frequency within the respective frequency band associated with the process attribute, and changes in the process attribute may result in changes in the respective frequency band associated with the process attribute. In some of these examples, increases or decreases in the magnitude of a process attribute may result in corresponding increases or decreases in intensities of one or more frequencies within the respective frequency band associated with the process attribute. Alternatively or additionally, the occurrence of a phenomenon within atomization system may result in a change in the peak frequency, peak intensity, or both, exhibited by the respective frequency band associated with the process attribute responsible for the occurrence of the phenomenon. Therefore, correlation module 254 may compare the compare the at least one characteristic with a known or expected characteristic value or range of characteristic values to determine the process attribute.

Correlation module 254 may compare the at least one characteristic with a known or expected characteristic value or range of characteristic values to determine the process attribute using one or more of the following example techniques. In some examples, correlation module 254 may select the known or expected characteristic value or range of characteristic values from a second frequency-domain spectrum, such as a known frequency-domain spectrum obtained from a test or experimental process or a frequency-domain spectrum from a past time interval of the present process. In some examples, the known frequency-domain spectrum may include a frequency-domain spectrum obtained from an atomization process that resulted in satisfactory product characteristics. In other examples, the known frequency-domain spectrum may be a reference frequency-domain spectrum that includes expected or nominal frequency content based on expected or nominal process attributes. Thus, comparing the at least one characteristic with known or expected characteristic value or range of characteristic values may allow correlation module 254 to determine the deviation or variation of a process attribute of the present process from the process attribute of a known process.

Comparing the at least one characteristic with a characteristic value or range of characteristic values obtained from the frequency-domain spectrum over a past time interval (460) may allow correlation module 254 to determine the change in the process attribute from the past time interval to the present time interval. In some examples, correlation module 254 may determine an increase or decrease in the intensity of a frequency in a selected frequency band compared to an intensity in the past frequency-domain spectrum as indicative of a respective increase or decrease in the magnitude of a process attribute associated with the selected frequency band.

In some examples, correlation module 254 identifies the at least one characteristic at a first interval of time, and compares it with a known characteristic value that is a value of the at least one characteristic at a second interval of time. In some examples, the first interval of time may be a present or recent interval of time, and the second interval of time may be a past interval of time. In some examples, the first interval of time may be associated with a known system performance, for instance, a known magnitude of a process attribute, and the second interval of time may be associated with an unknown system performance, for instance, an unknown magnitude of a process attribute. In some examples, correlation module 254 identifies the at least one characteristic at the first interval of time, and compares the at least one characteristic with a known or predetermined characteristic value or known or predetermined characteristic value range. In some examples, the at least one characteristic at the first interval of time includes at least one of an average intensity of the frequency-domain spectrum, a peak intensity of the frequency-domain spectrum, a selected frequency of the frequency-domain spectrum, or a frequency associated with a peak intensity of the frequency-domain spectrum and the predetermined characteristic value range includes a range of the corresponding characteristic.

In some examples, the process attribute may include nozzle wear, the at least one characteristic includes a peak frequency, and the predetermined characteristic value range includes a range of frequencies. In other examples, the process attribute includes nozzle wear, the at least one characteristic includes a peak intensity, and the known intensity value is associated with nozzle wear. In other examples, the process attribute includes nozzle wear, the at least one characteristic includes a peak frequency, and the known frequency value is associated with nozzle wear. In some examples, the process attribute includes powder pulsing, the at least one characteristic includes a peak frequency associated with powder pulsing.

In these ways, correlation module 254 may determine at least one process attribute of the plurality of process attributes. In some examples, atomization system 100 may perform a process possessing a plurality of process attributes. In some examples, identifying the magnitude of a process attribute may be desirable. Correlation module 254 may determine the process attribute, for instance, a process parameter that may include at least one of a temperature, a pressure, a mass flow rate, a volumetric flow rate, a molecular flow rate, a molar flow rate, a composition or a concentration, of a flowstream flowing through atomization system 100, for instance, of fluid flowing through atomization fluid feed line 130, or of dispersed stream 136, or of material flowing through material feed line 150 based at least in part on at least one time-dependent acoustic signal 142.

In some examples, atomization system 100 may exhibit unsatisfactory performance for an unknown reason that may be related to a process deviation. Computing device 180 may analyze at least one time-dependent acoustic data signal 142 by one or more example techniques described above with reference to FIG. 4 to determine the process deviation. In some examples, the process deviation may include at least one of material feed fluctuation, for instance, powder pulsing; flow blockage (for e.g., of one or more of atomization nozzle 120, atomizing fluid feed line 130, dispersed stream 136, material feed line 150); fluid (gas or liquid) leakage; a process deviation resulting from incompatibility (for e.g., wrong type or configuration of a component, for instance, using a nozzle that is unsuitable for a high viscosity flow); or wear or blockage of the at least one component, which may include at least one of wear or blockage of atomization nozzle 120, including wear or blockage of atomization outlet 126, wear of energy source 124, or wear or blockage of material inlet port 128.

In this way, computing device 180 may perform the examples techniques described above with reference to FIG. 4 to analyze at least one time-dependent acoustic data signal 142 to determine process attributes for a plurality of components of atomization system 100 (or of metal atomization system 300) performing a process, and determine whether process attributes are within a nominal or expected range, or if the process attributes are varying compared to an expected value.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in a computer system-readable medium, such as a computer system-readable storage medium, containing instructions. Instructions embedded or encoded in a computer system-readable medium, including a computer system-readable storage medium, may cause one or more programmable processors, or other processors, to implement one or more of the techniques described herein, such as when instructions included or encoded in the computer system-readable medium are executed by the one or more processors. Computer system readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer system readable media. In some examples, an article of manufacture may comprise one or more computer system-readable storage media.

Various examples have been described. These and other examples are within the scope of the following claims.

## Claims

1. A system comprising:
at least one acoustic sensor configured to generate at least one time-dependent acoustic data signal indicative of an acoustic signal generated by an atomization system performing a process possessing a plurality of process attributes; and
a computing device comprising:
an acoustic data signal processing module configured to:
receive the at least one time-dependent acoustic data signal; and
transform the at least one time-dependent acoustic data signal to a frequency-domain spectrum, wherein each process attribute of the plurality of process attributes is associated with at least one respective frequency band; and
a correlation module configured to determine a process attribute of the plurality of process attributes by identifying at least one characteristic of the frequency-domain spectrum.

2. The system of claim 1, wherein the process comprises at least one of spraying, solidification, powder transport, or mechanical motion.

3. The system of claims 1 or 2, wherein the process attribute of the plurality of process attributes comprises at least one of:
a process parameter comprising at least one of a temperature, a pressure, a mass flow rate, a volumetric flow rate, a molecular flow rate, a molar flow rate, a composition or a concentration, of a flowstream; or
a process deviation status comprising at least one of powder pulsing, material feed fluctuation, flow blockage, fluid leakage, or a process deviation resulting from incompatibility, wear, or blockage of a system component.

4. The system of claim 3, wherein the system component comprises at least one of an atomization nozzle, a fluid port, or a material inlet port.

5. The system of claim 4, wherein the system comprises the atomization nozzle, and wherein the at least one time-dependent acoustic data signal is indicative of at least one of nozzle wear, nozzle blockage, or clogging.

6. The system of claim 4, wherein the system comprises the atomization nozzle, and wherein the at least one time-dependent acoustic data signal is indicative of a quality of a particulate generated by the atomization nozzle.

7. The system of any one of claim 4, wherein the system comprises the atomization nozzle, and wherein the at least one time-dependent acoustic data signal is indicative of a material build up within the atomization nozzle.

8. The system of any one of claims 1 to 7, wherein the acoustic data signal processing module is configured to transform the at least one time-dependent acoustic data signal to the frequency-domain spectrum using at least one of a discrete Fourier transform or a fast Fourier transform.

9. The system of any one of claims 1 to 8, wherein the correlation module is configured to determine the process attribute by at least:
extracting a plurality of intensities from a selected frequency band of the frequency-domain spectrum, each intensity of the plurality of intensities corresponding to a respective frequency of a plurality of frequencies within the selected frequency band; and
selecting at least one of an intensity of the plurality of intensities or the respective frequency of the plurality of frequencies as the at least one characteristic.

10. The system of any one of claims 1 to 9, wherein the at least one characteristic comprises at least one of a peak frequency or a peak intensity.

11. The system of any one of claims 1 to 10, wherein the correlation module is further configured to determine the process attribute by at least comparing the at least one characteristic at a first interval of time with the at least one characteristic at a second interval of time.

12. The system of any one of claims 1 to 11, wherein the correlation module is further configured to determine the process attribute by at least comparing the at least one characteristic at a third interval of time with a predetermined characteristic value range.

13. The system of any one of claims 1 to 12, wherein the correlation module is further configured to determine the process attribute by at least comparing the at least one characteristic at a fourth interval of time with a respective known characteristic of a known frequency-domain spectrum.

14. The system of any one of claims 1 to 13, wherein the computing device further comprises an output device configured to output a representation of at least one of the at least one time-dependent acoustic data signal, the frequency-domain spectrum, the at least one characteristic of the frequency-domain spectrum, or the process attribute of which the at least one characteristic is indicative.

15. A method comprising:
receiving, by a computing device, from at least one acoustic sensor, at least one time-dependent acoustic data signal indicative of an acoustic signal generated by an atomization system performing a process possessing a plurality of process attributes;
transforming, by the computing device, the at least one time-dependent acoustic data signal to a frequency-domain spectrum, wherein each process attribute of the plurality of process attributes is associated with at least one respective frequency band; and
determining, by the computing device, a process attribute of the plurality of process attributes by identifying at least one characteristic of the frequency-domain spectrum.
